# EUROPÄISCHE PATENTANMELDUNG

(11) **EP 1 081 392 A2**
(43) Veröffentlichungstag der Anmeldung: **07.03.2001**
(21) Anmeldenummer: 00116830.1
(22) Anmeldetag: 04.08.2000
(51) Int. Cl.: F16B 12/24, A47B 96/06

(54) **Verbindungsbeschlag zum Gegeneinanderspannen zweier Teile**

(30) Priorität: 28.08.1999 DE 29915097 U
(71) Anmelder: G & G BESCHLÄGE GMBH, 72202 Nagold (DE)
(72) Erfinder: Nesch, Ralf, 72202 Nagold (DE); Freiberger, Gerd, 33719 Bielefeld (DE)
(74) Vertreter: Späth, Dieter, Dipl.-Ing.

(57) **Zusammenfassung**

Die Erfindung betrifft einen Möbel-Verbindungsbeschlag (10) zum Gegeneinanderspannen beispielsweise eines Zwischenbodens und einer Seitenwand eines Schranks. Der Verbindungsbeschlag (10) weist einen Winkel als Grundteil auf, in dessen beiden Schenkeln (14, 16) jeweils eine Schraube (20, 24) drehbar gelagert ist. Während eine der beiden Schrauben (20) eine herkömmliche Schraube (20) ist, weist die andere Schraube (24) ein Schraubengewinde (36) auf, dessen Gewindeachse exzentrisch zu einer Drehachse der Schraube (24) im Schenkel (16) des Grundteils (12) ist. Dadurch lässt sich der Verbindungsbeschlag (10) mit der Schraube (24) ohne Drehung der Schraube (24) in ein Bohrloch im Zwischenboden, dessen Durchmesser in etwa einem Außendurchmesser des Schraubengewindes (36) entspricht, stecken, und durch Drehung der Schraube (24) um 180 Grad drückt sich das Schraubengewinde (36) in eine Bohrungswandung ein und spannt den Zwischenboden gegen die Seitenwand.

## Beschreibung

Die Erfindung betrifft einen Verbindungsbeschlag zum Gegeneinanderspannen zweier Teile mit den Merkmalen des Oberbegriffs des Anspruchs 1. Die Erfindung betrifft insbesondere einen Möbelbeschlag zum Gegeneinanderspannen zweier Holz- oder Kunststoffplatten, die in einem Winkel zueinander oder in einer gemeinsamen Ebene angeordnet sind.

Es ist bekannt, Zwischenböden von Regalen oder Schränken über Möbelwinkel mit Seitenwänden des Regals oder Schranks zu verbinden. Dies hat den Nachteil, daß die Zwischenböden nicht gegen die Seitenwände gespannt werden und infolgedessen oftmals ein Spalt zwischen dem Zwischenboden und der Seitenwand besteht.

Auch ist es bekannt, ein Boden-, Deck- oder auch ein Zwischenbrett mit Exzenterspannanordnung mit den Seitenwänden des Regals oder Schranks zu verbinden und gegen diese zu spannen. Die bekannten Exzenterspannanordnungen weisen einen am Außenumfang zylindrischen Exzenter auf, der in eine komplementäre Ansenkung des Boden- oder Deckbretts eingesetzt wird. Mit einer Ausnehmung ergreift der Exzenter einen Kopf einer Schraube, die senkrecht in die Seitenwand des Regals oder Schranks eingeschraubt und die eine radial zur Ansenkung angebrachte Bohrung im Boden- oder Deckbrett durchgreift. Durch Drehung des Exzenters um beispielsweise 90° wird die Schraube tiefer in den Exzenter hineingezogen und dadurch das Boden- oder Deckbrett gegen die Seitenwand gespannt. Diese Exzenterspannanordnung hat den Nachteil, daß sie aufwendigbei der Fertigung und infolgedessen teuer ist und daß ihre Verwendung wegen der erforderlichen Ansenkung und der dazu radialen Bohrung aufwendig ist. Hinzukommt, daß die radiale Bohrung durch eine Stirnfläche des Brettes gebohrt werden muß, was üblicherweise erheblich mehr Aufwand bedeutet als eine Bohrung senkrecht in ein Brett.

Der Erfindung liegt die Aufgabe zugrunde, einen in Herstellung und Verwendung einfachen Verbindungsbeschlag vorzuschlagen.

Diese Aufgabe wird erfindungsgemäß durch die Merkmale des Anspruchs 1 gelöst. Der erfindungsgemäße Verbindungsbeschlag weist ein Grundteil auf, das beispielsweise durch Anschrauben mit einer herkömmlichen Holzschraube mit einem der beiden gegeneinander zu spannenden Teile verbindbar ist. Im Grundteil ist eine weitere Schraube um eine Drehachse drehbar gelagert. Diese Schraube weist ein Schraubengewinde mit einer Gewindeachse auf, die erfindungsgemäß exzentrisch zur Drehachse der Schraube im Grundteil verläuft. Die Drehachse der Schraube und ihre Gewindeachse weisen einen Abstand voneinander auf. Dies hat zur Folge, daß beim Drehen der Schraube im Grundteil die Gewindeachse sich auf einer Kreisbogenbahn um die Drehachse der Schraube bewegt. Diese Kreisbogenbewegung der Gewindeachse wird erfindungsgemäß als Spannbewegung genutzt. Die Schraube wird in ein Loch im anderen der beiden gegeneinander zu spannenden Teile gesteckt, wobei ein Durchmesser des Lochs so groß ist, daß die Schraube gesteckt werden kann und nicht geschraubt werden muß. Durch eine halbe Drehung der Schraube in dem Loch in dem anderen der beiden gegeneinander zu spannenden Teile bewegt sich die Gewindeachse der Schraube des erfindungsgemäßen Verbindungsbeschlags auf einer Halbkreisbogenbahn.

Dadurch läßt sich das eine, mit dem Grundteil verbundene Teil um einen Spannweg, der dem Durchmesser des beschriebenen Halbkreises entspricht, gegen das andere Teil spannen. Bei der Drehung schneidet oder drückt sich das Schraubengewinde in eine Lochwandung im anderen Teil ein, es wirkt dabei wie ein herkömmliches Schraubengewinde, das den Verbindungsbeschlag axial zur Schraube gegen die Oberfläche des anderen Teils spannt. Es findet also eine Spannbewegung sowohl senkrecht zur Oberfläche des anderen der beiden gegeneinander zu spannenden Teile als auch in der Ebene der Oberfläche statt.

Die Erfindung hat zunächst den Vorteil, daß sie einfach und preisgünstig herstellbar ist. Weiterer Vorteil der Erfindung ist, daß der Verbindungsbeschlag lediglich zwei Löcher zu seiner Anbringung benötigt, die beide senkrecht und infolgedessen mit geringem Aufwand beispielsweise in Holz- oder Kunststoffplatten anbringbar sind. Die Löcher müssen nicht in die Stirnseiten der Platten gebohrt werden. Dabei kann eines der beiden Löcher ohne vorzubohren unmittelbar durch das Eindrehen einer herkömmlichen Holzschraube hergestellt werden. Auch kann vielfach für dieses eine Loch ein ohnehin vorhandenes Loch aus einer Lochreihe beispielsweise in einer Seitenwand eines Regals oder eines Schranks verwendet werden, das ursprünglich zum Einsetzen eines Stifts und Auflegen eines Zwischenbodens vorgesehen ist. Zusätzlicher Vorteil der Erfindung ist, daß das Spannen höchstens eine halbe Umdrehung erfordert, also mit einem einzigen und schnellen Handgriff durchführbar ist. Weiterer Vorteil der Erfindung ist die sichere Verbindung der beiden gegeneinander zu spannenden Teile durch Formschluß (Verschrauben) mit dem Verbindungsbeschlag. Zudem ist der erfindungsgemäße Verbindungsbeschlag vielseitig anwendbar, er ermöglicht den Zusammenbau beispielsweise eines Schranks mit nur einem Verbindungsbeschlag. Dadurch lassen sich unterschiedliche Verbindungsteile vermeiden, was den Zusammenbau des Schranks vereinfacht und Verwechslungen zum Zusammenbau notwendiger Teile ausschließt.

Bei einer Ausgestaltung der Erfindung ist vorgesehen, einen Gewindekern des Schraubengewindes exzentrisch zur Drehachse der Schraube anzuordnen. Das Schraubengewinde einschließlich seines Gewindekerns kann bei dieser Ausgestaltung ein herkömmliches Schraubengewinde, insbesondere ein Holzschraubengewinde sein, das allerdings exzentrisch versetzt beispielsweise zum Schraubenkopf angeordnet ist.

Bei einer Ausgestaltung der Erfindung ist vorgesehen, daß das Schraubengewinde exzentrisch zum Gewindekern ist. Das Gewinde weist bei dieser Ausführungsform der Erfindung eine sich über den Umfang ändernde Gewindehöhe auf, die bei Ausgestaltungen der Erfindung an einer Stelle des Umfangs Null sein kann. Letzteres bedeutet, daß an einer Stelle des Umfangs der Gewindekern frei von dem Gewinde ist. Dadurch ergibt sich eine großflächige Anlage des Gewindekerns an einer Lochwandung beim Gegeinanderspannen der beiden Teile. Die beiden Ausführungsformen der Erfindung mit dem exzentrisch zur Drehachse der Schraube angeordneten Gewindekern und mit dem exzentrisch zum Gewindekern angeordneten Schraubengewinde können jeweils für sich oder auch gemeinsam bei Ausgestaltungen der Erfindung verwirklicht sein. Die Kombination dieser beiden Ausgestaltungen der Erfindung bewirkt eine besonders große Exzentrizität der Gewindeachse des Schraubengewindes.

In bevorzugter Ausgestaltung der Erfindung weist der Verbindungsbeschlag eine Drehwinkelbegrenzung für die Schraube auf, die deren Drehwinkel so begrenzt, daß die Schraube zwischen einer entspannten Position und einer Spannposition hin- und hergedreht werden kann. Die Drehwinkelbegrenzung beträgt insbesondere 180°.

Um die Schraube transport- und montagesicher im Grundteil des Verbindungsbeschlags zu halten weist eine Ausgestaltung der Erfindung eine Axialsicherung für die Schraube im Grundteil auf. Eine solche Axialsicherung wird bei einer Ausgestaltung der Erfindung durch ein oder mehrere seitlich von der Schraube abstehende Sicherungselemente bewirkt, die das Grundteil hintergreifen und dadurch die Schraube durch Formschluß axial am Grundteil sichern.

Bei einer Ausgestaltung der Erfindung ist ein Klemmsitz zwischen der Schraube und dem Grundteil vorgesehen, der zwei Funktionen haben kann. Zum einen kann der Klemmsitz als Axialsicherung zum transport- und montagesicheren Halten der Schraube im Grundteil dienen und die Schraube insbesondere auch beim Einbringen in das Loch im anderen der beiden gegeneinander zu spannenden Teile gegen Herausdrücken aus dem Grundteil sichern. Als weiteres kann der Klemmsitz die Schraube gegen unbeabsichtigtes Verdrehen insbesondere aus der entspannten Position sichern.

Zum Anschrauben des Verbindungsbeschlags an dem einen der beiden gegeneinander zu spannenden Teile sieht eine Ausgestaltung der Erfindung einen mit dem Grundteil einstückigen Gewindezapfen vor.

Bei einer Ausgestaltung der Erfindung ist eine ballige Anlagefläche des Grundteils vorgesehen. Dies bedeutet, daß die Fläche oder Flächen des Grundteils, mit denen das Grundteil an einem oder an beiden gegeneinander zu spannenden Teilen anliegt, ballig ausgebildet ist, um insbesondere ein Verkratzen der Oberfläche der Teile durch eine Relativbewegung des Grundteils auf der Oberfläche der Teile zu vermeiden.

Die Erfindung wird nachfolgend anhand eines in der Zeichnung dargestellten Ausführungsbeispiels näher erläutert. Es zeigen:

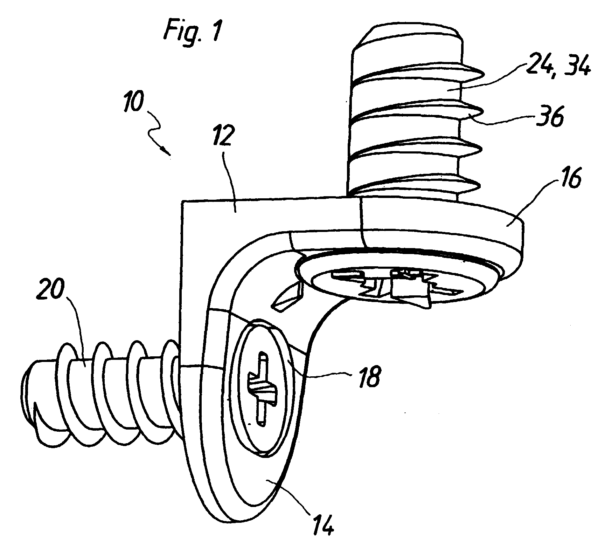

- Figur 1: einen erfindungsgemäßen Verbindungsbeschlag in perspektivischer Darstellung
- Figur 2: den Verbindungsbeschlag aus Figur 1 im Schnitt; und
- Figur 3: einen Querschnitt gemäß Linie III - III in Figur 2.

Der in der Zeichnung dargestellte, erfindungsgemäße Verbindungsbeschlag 10 ist als Möbelwinkel ausgebildet, wobei die Erfindung dadurch weder auf Möbelbeschläge noch auf Winkelbeschläge beschränkt werden soll. Der in der Zeichnung dargestellte Verbindungsbeschlag 10 weist als Grundteil ein Winkelstück 12 mit zwei Schenkeln 14, 16 auf. Zum Befestigen beispielsweise an einer nicht dargestellten Seitenwand eines Regals oder Schranks ist einer der beiden Schenkel 14 mit einem Loch 18 versehen, durch das eine herkömmliche Holzschraube 20 gesteckt ist. Die Holzschraube 20 weist ein selbstschneidendes Gewinde auf, sie ist zur Befestigung des Winkelstücks 12 in ein Loch in der nicht dargestellten Seitenwand einschraubbar. Das Loch kann Bestandteil einer vertikalen Lochreihe der Seitenwand sein, die an sich zum Einstecken von Stiften zum Auflegen von Zwischenböden vorgesehen sind. Das Loch 18 im einen Schenkel 14 des das Grundteil des erfindungsgemäßen Verbindungsbeschlags 10 bildenden Winkelstücks 12 ist als Langloch quer zum Schenkel 14 ausgebildet, um das Winkelstück 12 seitlich verstellen zu können.

Der andere Schenkel 16 des Winkelstücks 12 weist ein zylindrisches Loch 22 auf, in das eine Schraube 24 mit ihrem Schraubenkopf 26 drehbar eingesetzt ist. Der Schraubenkopf 26 weist einen zylindrischen Bund 28 auf, der zusammen mit dem zylindrischen Loch 22 im anderen Schenkel 16 eine Drehlagerung 22, 28 der Schraube 24 im anderen Schenkel 16 des Winkelstücks 12 bildet. Die Drehlagerung 22, 28 legt eine Drehachse 30 der Schraube 24 im Winkelstück 12 fest. Der Schraubenkopf 26 weist einen radial über den Bund 28 überstehenden Flansch 32 auf, der auf dem anderen Schenkel 16 des Winkelstücks 12 aufliegt und die Schraube 24 in einer Richtung axial am anderen Schenkel 16 des Winkelstücks 12 sichert.

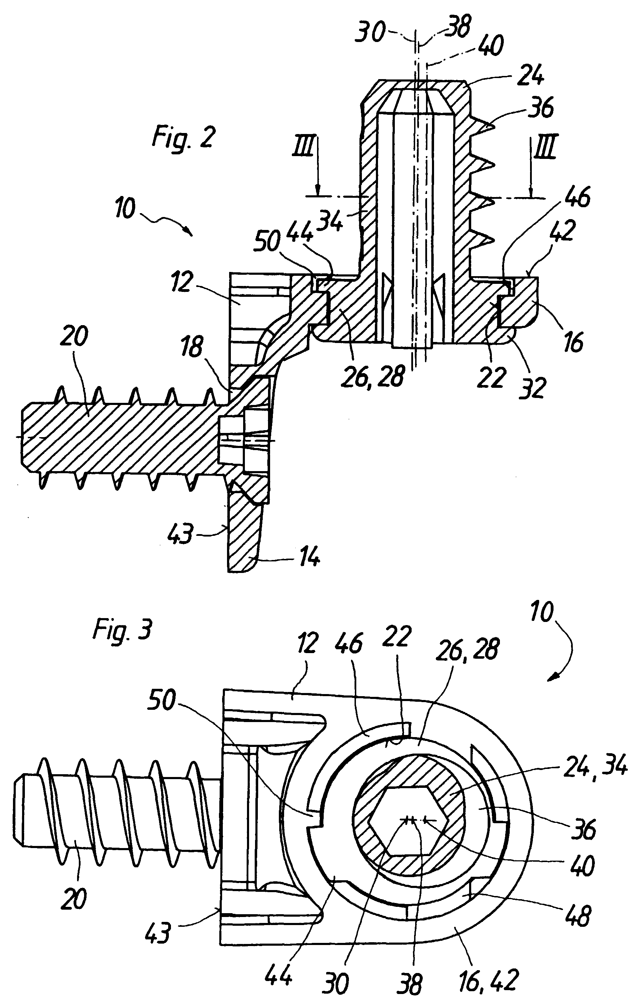

Von einer dem Flansch 32 abgewandten Seite des Bundes 28 steht ein im wesentlichen zylindrischer Bolzen 34 vom Bund 28 der Schraube 24 ab, der einen Gewindekern 34 eines Schraubengewindes 36 der Schraube 24 bildet. Der den Gewindekern 34 bildende Bolzen ist einstückig mit dem Kopf 26 der Schraube 24. Der Schraubenkern 34 ist versetzt, also exzentrisch zur Drehachse 30 der Schraube 24 angeordnet, was aus der Lage der Gewindekernachse 38 und der Lage der Drehachse 30 in Figur 2 erkennbar ist. In derselben Richtung wie die Gwindekernachse 38 versetzt allerdings mit größerer Exzentrizität ist das Schraubengewinde 36 angeordnet. Die Exzentrizität des Schraubengewindes 36 ist aus der Lage der Gewindeachse 40 im Vergleich mit der Drehachse 30 der Schraube 24 in Figur 2 erkennbar. Das Schraubengewinde 36 weist aufgrund seiner exzentrischen Anordnung am Gewindekern 34 eine sich über den Umfang verändernde Gewindehöhe auf, die an einer Stelle des Umfangs Null ist.

Beim Drehen der Schraube 24 im anderen Schenkel 16 des Winkelstücks 12 bewegt sich das Schraubengewinde 36 bzw. die Gewindeachse 40 auf einer Kreisbahn um die Drehachse 30. Diese Bewegung des Schraubengewindes 36 auf einer Kreisbahn beim Drehen der Schraube 24 wird folgendermaßen als Spannbewegung genutzt.: Nachdem der eine Schenkel 14 mit der herkömmlichen Schraube 20 beispielsweise an einer nicht dargestellten Seitenwand eines Regals oder eines Schranks angeschraubt worden ist, wird die Schraube 24 im anderen Schenkel 16 in ein Loch in einem zur Seitenwand senkrechten, nicht dargestellten Brett, beispielsweise einem Zwischenboden des Regals oder des Schranks gesteckt. Das Loch in dem Zwischenboden weist einen Durchmesser auf, der einem Außendurchmesser des Schraubengewindes 36 der Schraube 24 entspricht. Die Schraube 24 wird nicht in das Loch eingeschraubt, sondern gesteckt. Vor dem Einstecken wird die Schraube 24 so verdreht, daß ihr Schraubengewinde 36 soweit wie möglich von der Seitenwand des Regals oder Schranks weggedreht ist. Anschließend wird die Schraube 24 um 180° gedreht und zwar bei einem rechtsgängigen Schraubengewinde 36 nach rechts. Dabei passiert folgendes: Das Schraubengewinde 36 vollführt eine halbkreisbogenförmige Bewegung in Richtung der nicht dargestellten Seitenwand und bewegt dadurch den nicht dargestellten Zwischenboden in Richtung der Seitenwand, der Zwischenboden, in dessen Loch die Schraube 24 mit dem exzentrischen Schraubengewinde 36 eingreift, wird mit einer Stirnseite gegen die Seitenwand gespannt, an der der Verbindungsbeschlag 10 mit der herkömmlichen Schrauben 10 befestigt ist. Zugleich bewirkt die Drehung der Schraube 24, daß sich ihr Schraubengewinde 36 in eine Wand des Lochs im Zwischenboden eindrückt oder einschneidet, wobei die Schraube 24 den anderen Schenkel 16 axial gegen den Zwischenboden spannt. Die Schraube 24 mit dem exzentrischen Schraubengewinde 36 bewirkt also sowohl ein Spannen des nicht dargestellten Zwischenbodens mit seiner Stirnseite gegen die nicht dargestellte Seitenwand des Regals oder Schranks und ein Spannen des Winkelstücks 12 mit seinem anderen Schenkel 16 gegen den Zwischenboden.

Um eine Beschädigung einer Oberfläche der Seitenwand oder des Zwischenbodens zu vermeiden, kann eine Anlagefläche 42, 43 der beiden Schenkel 14, 16 des Winkelstücks 12 geringfügig ballig ausgebildet, was in der Zeichnung wegen der geringen Balligkeit nicht erkennbar ist. Dies ist insbesondere dann vorgesehen, wenn das Winkelstück 12 einen mit seinem einen Schenkel 14 einstückigen, nicht dargestellten Gewindezapfen anstelle der Holzschraube 20 aufweist.

Zur axialen Sicherung der Schraube 24 mit dem exzentrischen Gewinde 36 am anderen Schenkel 16 des Winkelstücks 12 weist die Schraube zwei flügelartige, seitlich abstehende Sicherungselemente 44 auf. Die beiden Sicherungselemente 44 liegen einer umlaufenden Ringstufe 46 ein, die auf der Seite der Anlagefläche 42 im anderen Schenkel 16 des Winkelstücks 12 ausgebildet ist. Zusammen mit dem Flansch 32 sichern die Sicherungselemente 44 die Schraube 24 axial im anderen Schenkel 16 des Winkelstücks 12. Um die Schraube 24 in den anderen Schenkel 16 einsetzen zu können, weist das zylindrische Loch 22 im anderen Schenkel 16 zwei zu den Sicherungselementen 44 der Schraube 24 komplementäre Durchbrüche 48 auf. Ein axialer Abstand der Sicherungselemente 44 vom Flansch 32 ist so bemessen, daß die Schraube 24 mit Klemmsitz am anderen Schenkel 16 gehalten ist, so daß sie sich nicht selbsttätig verdreht, aber mit einem Schraubendreher gedreht werden kann.

Zur Drehwinkelbegrenzung weist der andere Schenkel 16 einen Anschlag 50 in Form einer Nase auf, die in der Ringstufe 46 angeordnet ist und die in Zusammenwirken mit den beiden Sicherungselementen 44 einen Drehwinkel der Schraube 24 auf 180° begrenzt.

Der erfindungsgemäße Verbindungsbeschlag 10 wird vorzugsweise vormontiert ausgeliefert. Dazu wird die Schraube 24 mit dem exzentrischen Schraubengewinde 36 mit ihren beiden Sicherungselementen 44 deckungsgleich zu den beiden Durchbrüchen 48 durch den anderen Schenkel 16 gesteckt, so daß die Schraube 24 und 28 drehbar im Loch 22 des anderen Schenkels 16 aufgenommen ist. Anschließend wird die Schraube 24 rückgedreht, d. h. bei einem rechtsgängigen Schraubengewinde 36 nach links gedreht, bis eines der beiden Sicherungselemente 44 am Anschlag 50 anstößt. Der Anschlag 50 ist so angeordnet, daß das Schraubengewinde 36 nach dem Rückdrehen soweit wie möglich vom einen Schenkel 14 des Winkelstücks 12 entfernt ist und in oben beschriebener Weise durch Drehung um 180°, bis das andere Sicherungselement 44 am Anschlag 50 anstößt, die Spannbewegung vollführt werden kann.

Anstelle des dargestellten Winkelstücks 12 kann der erfindungsgemäße Verbindungsbeschlag 10 auch ein nicht dargestelltes, ebenes Grundteil aufweisen. Zum Gegeneinanderspannen beispielsweise zweier nicht dargestellter Küchenplatten mit ihren Stirnflächen wird ein solcher Verbindungsbeschlag beispielsweise mit einer herkömmlichen Schraube an der Unterseite einer Küchenplatte festgeschraubt und mit einer erfindungsgemäßen, ein exzentrisches Schraubengewinde aufweisenden Schraube wird die andere Küchenplatte wie oben zu dem Winkelbeschlag beschrieben gegen die eine Küchenplatte gespannt. Ein solches ebenes Grundteil kann auch zwei Schrauben mit erfindungsgemäß exzentrischem Gewinde aufweisen.

## Patentansprüche

1. Verbindungsbeschlag zum Gegeneinanderspannen zweier Teile, wobei der Verbindungsbeschlag ein Grundteil aufweist, in welchem eine Schraube um eine Drehachse drehbar gelagert ist, **dadurch gekennzeichnet**, daß die Schraube (24) ein Schraubengewinde (36) aufweist, dessen Gewindeachse (40) exzentrisch zur Drehachse (30) der Schraube (24) im Grundteil (12) ist.

2. Verbindungsbeschlag nach Anspruch 1, **dadurch gekennzeichnet**, daß ein Gewindekern (34) des Schraubengewindes (36) exzentrisch zur Drehachse (30) der Schraube (24) im Grundteil (12) ist.

3. Verbindungsbeschlag nach Anspruch 1 oder 2, **dadurch gekennzeichnet**, daß das Schraubengewinde (36) exzentrisch zum Gewindekern (34) ist.

4. Verbindungsbeschlag nach Anspruch 3, **dadurch gekennzeichnet**, daß das Schraubengewinde (36) nur auf einem Teil eines Umfangs des Gewindekerns (34) vorhanden ist.

5. Verbindungsbeschlag nach einem der vorhergehenden Ansprüche, **dadurch gekennzeichnet**, daß der Verbindungsbeschlag (10) eine Drehwinkelbegrenzung (44, 50) für die Schraube (24) aufweist.

6. Verbindungsbeschlag nach einem der vorhergehenden Ansprüche, **dadurch gekennzeichnet**, daß der Verbindungsbeschlag (10) eine Axialsicherung (32, 44) der Schraube (24) am Grundteil (12) aufweist.

7. Verbindungsbeschlag nach Anspruch 6, **dadurch gekennzeichnet**, daß die Schraube (24) ein seitlich abstehendes Sicherungselement (44) aufweist, das das Grundteil (12) hintergreift und dadurch die Schraube (24) axial am Grundteil (12) sichert.

8. Verbindungsbeschlag nach einem der vorhergehenden Ansprüche, **dadurch gekennzeichnet**, daß die Schraube (24) einen Klemmsitz am Grundteil (12) aufweist.

9. Verbindungsbeschlag nach einem der vorhergehenden Ansprüche, **dadurch gekennzeichnet**, daß das Grundteil (12) einen mit dem Grundteil einstückigen Gewindezapfen aufweist.

10. Verbindungsbeschlag nach einem der vorhergehenden Ansprüche, **dadurch gekennzeichnet**, daß das Grundteil (12) eine ballige Anlagefläche (42, 43) aufweist.
